(19) Europäisches Patentamt / European Patent Office / Office européen des brevets

(11) **EP 4 759 870 A1**

(12) **EUROPEAN PATENT APPLICATION**


(43) Date of publication:
**17.06.2026 Bulletin 2026/25**

(21) Application number: **24307080.2**

(22) Date of filing: **11.12.2024**

(51) International Patent Classification (IPC):
***C08J 9/28*** *(2006.01)* ***C08F 222/02*** *(2006.01)*

(52) Cooperative Patent Classification (CPC):
(C-Sets available)
**C08J 9/283; C08F 222/02;** C08J 2201/022; C08J 2201/026; C08J 2201/028; C08J 2201/0504; C08L 35/00 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**



(71) Applicants:
- **PARIS SCIENCES ET LETTRES**
  **75006 Paris (FR)**
- **Ecole Nationale Superieure de Chimie de Paris**
  **75005 Paris (FR)**
- **Ecole Supérieure de Physique et de Chimie Industrielles de la Ville de Paris**
  **75005 Paris (FR)**
- **Centre National de la Recherche Scientifique**
  **75016 Paris (FR)**
- **SORBONNE UNIVERSITE**
  **75006 Paris (FR)**

(72) Inventors:
- **MARCELLAN, Alba**
  **75005 Paris (FR)**
- **PANTOUSTIER, Nadège**
  **75005 Paris (FR)**
- **ROBERT, Carine**
  **75005 Paris (FR)**
- **ABOU KHACHFE, Hiam**
  **75005 Paris (FR)**

(74) Representative: **Plasseraud IP**
**104 Rue de Richelieu**
**CS92104**
**75080 Paris Cedex 02 (FR)**


(54) **METHOD OF PREPARATION OF A SOLID POLYMERIC FOAM**


(57) The present invention provides a method of preparation of a polymeric foam comprising the following steps:
a. Providing a material A,
b. Heating the material A to obtain the polymeric foam,
Wherein the material A is a polymeric material comprising a repeating unit A, said repeating unit A comprising a moiety A having the following structure:

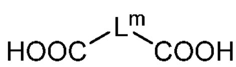,

wherein $L^m$ is a substituted alkane-α,ω-diyl radical wherein said alkane is a C2 to C7 alkane or $L^m$ is a substituted alkene-α,ω-diyl radical wherein said alkene is a C2 to C7 alkene.


EP 4 759 870 A1

(52) Cooperative Patent Classification (CPC): (Cont.)

C-Sets
**C08F 222/02, C08F 222/102**

## Description

The present disclosure relates to a method of preparation of a solid polymeric foam. More specifically the method disclosed herein concerns a method of preparation of a foam by heating a self-foaming polymeric precursor.

In the prior art, solid polymeric foams are obtained by forming bubbles of gas in a polymer melt or a mixture of monomers, followed by the stabilization a polymeric matrix resulting from the solidification of the polymer melt of from the polymerization of the mixture of monomers. Such foams combine many interesting properties such as lightness, low thermal conductivity, low electrical conductivity, acoustic insulation, shock absorption, flame retardant properties etc., which makes them irreplaceable in a wide range of applications including packaging, electronics, transportation, furnishing, clothing, personal protective equipment, filtration, flotation, aerospace, or building and construction materials.

Polyethylene, polystyrene, epoxy resin, phenolic resins or rubbers are commonly used polymeric matrix for preparing foams. The growth of porous cells inside these matrices requires the use of an external blowing agent (BA). In general, they are low boiling point liquids, such as short alkanes or halogeno-alkanes and -alkenes. They are directly mixed with the polymer precursors and evaporate when the temperature is increased during the preparation of the foam. Historically, chlorofluorocarbons (CFCs) were extensively used as BA because of their high chemical and thermal stability. However, these substances are responsible for the depletion of stratospheric ozone and the formation of the so-called ozone hole. The Montreal protocol (1987) has banned the use of CFCs and the latter have been replaced by hydrofluorocarbons (HFCs) that do not harm the ozone layer as much as CFCs. However, an amendment to the Montreal protocol will lead to the banning of these HFCs also in the next 20 years.

This is one reason for the success of polyurethane (PU) foams. Indeed, PUs are made by polyaddition of polyols onto polyisocyanates and the partial hydrolysis of the latter during the polymerization reaction results in the formation of unstable carbamic acids, which spontaneously decompose into an amine and carbon dioxide. The insitu generated CO2 serves as the BA. These PU foams are called "self-foamed" in the sense that the BA is held latent in the molecular structure of the polymer precursors. This allows very simple foaming processes and gives access to easy lab-scale development as well as industrial implementation. Unfortunately, isocyanates are toxic, which forces the industry to look for isocyanate-free foams.

Thus, there is a need for a novel self-foaming product that does not necessitate the use of toxic monomers, such as isocyanates.

## Brief description of the figures

Fig. 1 shows the appearance of a piece of material A (sample S2) before and after foaming by heating at 200°C in a thermobalance under air.

Fig. 2 shows FTIR spectra of the material A (sample S6) during foaming as a function of temperature (heating rate of 10°C/min).

Fig. 3 shows the curves obtained by TGA of the material A (sample S6) during foaming (heating rate of 10°C/min).

## Detailed description

In view of the above mentioned needs the present invention provides the following items and embodiments:

1. Item 1: Method of preparation of a polymeric foam comprising the following steps:

   a. Providing a material A,
   b. Heating the material A to obtain the polymeric foam,

   Wherein the material A is a polymeric material comprising a repeating unit A, said repeating unit A comprising a moiety A having the following structure:

   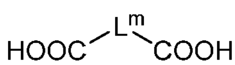 ,

   wherein $L^m$ is a substituted alkane-$\alpha,\omega$-diyl radical wherein said alkane is a C2 to C7 alkane or $L^m$ is a substituted alkene-$\alpha,\omega$-diyl radical wherein said alkene is a C2 to C7 alkene.

It has been observed that it was possible to easily obtain a polymeric foam upon heating the material A, without the need of an external blowing agent and without excessive degradation of the material as can be seen by the light color of the obtained foam. In other words, it has been observed that the material A is self-foaming in relatively mild conditions. Without wishing to be bound by theory, it is presumed that the specific arrangement of the carboxylic acid moieties in material A allows the easy foaming of the material because it would lead to the formation of relatively easy to obtain cyclic anhydrides and/or ketones. Indeed, the foam is presumably obtained because the formation of an anhydride between the two carboxylic acid moieties in the moiety A liberates a molecule of water vapor and because the subsequent decarboxylation of the thus formed anhydride (when it happens) gives a cyclic ketone and carbon dioxide as a gas.

Since moiety A is comprised in a repeating unit of the polymeric material A, it implies that there is a substantial number of such moieties A in the material A such that enough gas is produced to form the foam. Indeed, moiety A will be repeated in the material. However, moiety A is not necessarily a moiety of the only repeated unit in the polymeric material A. For example, a repeating unit comprising the moiety A may be alternating (not necessarily in a regular manner) with other repeating units in the polymer chain.

It should be understood that moiety A is linked to the polymer chain through the moiety Lm. Indeed, Lm is a substituted radical and the substituents of radical comprise the rest of the polymer chain.

The substituents in Lm can form a cycle, for example an aromatic cycle. For example, in a phthalic acid moiety, the benzene ring is a substituted ethene-$\alpha,\omega$-diyl radical in the sense of the present invention.

2. Item 2: The method of item 1, wherein the material A is a non-crosslinked material.

It has been observed that when the material A is non-crosslinked, a foam is nonetheless obtained by the method of the present invention. Without wishing to be bound by theory, it is presumed that the reaction of anhydride formation and decarboxylation of anhydrides described above also may happen intermolecularly which gives added cohesion to the obtained foam even when the starting material A is a non-crosslinked polymer. Other processes leading to the cohesion of the obtained foam can include entangling of polymeric chains and other intermolecular interactions (e.g. hydrogen bonds between the carboxylic acid moieties).

3. Item 3: The method of item 1, wherein the material A is a covalently crosslinked polymeric material.

Self-foaming polymers of the prior art are either non crosslinked thermoplastic polymers that melt when they are heated to form the foam or monomer mixes that polymerize and become crosslinked as part of the foam forming mechanism (see Florent Monie et al. Self-foaming polymers: Opportunities for the next generation of personal protective equipment. Materials Science and Engineering: R: Reports, 2021, 145, pp.100628). The foaming of these polymers thus involves passing through a fluid state. In the method of item 2, on the other hand, the crosslinked nature of the material A ensures that it remains solid (at least as a gel, meaning it can be soft but will not flow) throughout the process. This opens up opportunities for using the method in actuators (the volume expansion of the material A caused by the foaming process is then used to produce a mechanical force, or torque) where the flowing of the material A should be avoided during the foaming process.

4. Item 4: The method of any one of items 1 to 3, wherein the material A has a predetermined shape and wherein the polymeric foam obtained has the same shape.

It has been observed that when the material A that is heated has a given shape, the obtained foam is of the same shape.

Predetermined shapes may include cones, cylinders, spheres, prismatoids (e.g. pyramids; wedges; quadrilateral faced hexahedral prismatoids, such as parallelepipeds, rhombohedrons, trigonal trapezohedra, cuboids, quadrilateral frusta, and cubes; prisms; antiprisms; cupolae, and frusta) and any truncated variant thereof.

5. Item 5: The method of any one of items 1 to 3, wherein the material A is provided in the form of a powder in step a. and wherein the material A is introduced into a mold before step b.

When the material A in the form of a powder is foamed inside a mold, the obtained foam takes the shape of the mold. Here also, it is presumed that intermolecular anhydride formation and decarboxylation of the anhydride can participate to the cohesion of the obtained foam together with entangling and intermolecular (hydrogen) bond formation.

6. Item 6: The method of any one of items 1 to 5, wherein $L^m$ is a substituted alkane-$\alpha,\omega$-diyl radical wherein said alkane is a C2 to C7 alkane.

7. Item 7: The method of item 6, wherein $L^m$ is a substituted alkane-$\alpha,\omega$-diyl radical wherein said alkane is a C3 to C7 alkane.

According to this item, the substituted alkane-$\alpha,\omega$-diyl radical in Lm can be any one of the following: substituted propan-1,3-diyl; substituted butan-1,4-diyl; substituted pentan-1,5-diyl; substituted hexan-1,6-diyl; substituted heptan-1,7-diyl.

8. Item 8: The method of item 7, wherein $L^m$ is a substituted butan-1,4-diyl radical or a substituted pentan-1,5-diyl radical.

This preferable selection for Lm, allows easier obtention of the foam. Without wishing to be bound by theory, it is supposed that it is because the more stable 5- and 6-membered cyclic ketones are obtained.

9. Item 9: The method of any one of items 1 to 8, wherein the substituents in $L^m$ do not form a cycle.

10. Item 10: The method of any one of items 7 to 9, wherein the moiety A has the following structure:

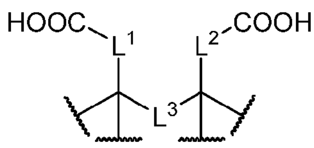
,

wherein L1, L2 and L3 are independently selected from the list consisting of: a bond, -CH2-, and -CH2-CH2-, and wherein L1, L2 and L3 comprise a total number of carbons of 1 to5.

11. Item 11: The method of item 10, wherein the moiety A has the following structure:

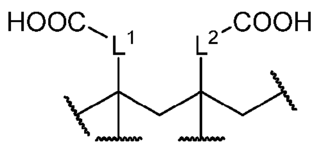
,

Wherein L1 and L2 are independently selected from the list consisting of: a bond, -CH2-, and -CH2-CH2-

12. Item 12: The method of item 11, wherein the moiety A has the following structure:

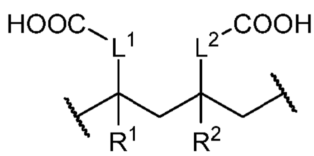
,

wherein

L1, and L2 are independently selected from the list consisting of: a bond, -CH2-, and -CH2-CH2-, and
R1 and R2 are independently selected from the list consisting of: H, CH3, COOH, CH2-CH3, CH2-COOH, and CH2-CH2-COOH.

13. Item 13: The method of item 12, wherein L1 and L2 are each -CH2- and wherein R1 and R2 are each COOH.

When L1 and L2 are each -CH2- and wherein R1 and R2 are each COOH, moiety A can be obtained by polymerization (e.g. radical polymerization) of itaconic acid. Itaconic acid can be produced on an industrial scale by fermentation of carbohydrates using fungi (e.g., Aspergillus niger, Aspergillus itaconicus or Aspergillus terreus) and is thus a renewable resource. Moreover, what is left of the polyitaconic acid in the final foam increases the recyclability of the foam because polyitaconic acid depolymerizes relatively easily.

14. Item 14: The method of any one of items 1 to 13, wherein the material A further comprises repeating units $A_d$ and $A_{dd}$, respectively comprising moieties $A_d$ and $A_{dd}$ having the same structure as moiety A except for the fact that one, respectively two of the COOH moieties comprised in moiety A are deprotonated.

Moiety $A_d$ thus can have the following structure:

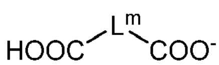

and moiety $A_{dd}$ can have the following structure:

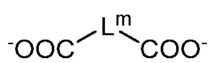
.

When Lm is more specific for moiety A, then Lm is specified in the same way for moieties $A_d$ and $A_{dd}$.

15. Item 15: The method of items 14, wherein an amount of COOH moieties in the material A is of 0.5 to 2, preferably of 0.7 to 1.6, more preferably of 0.9 to 1.2 times the amount of deprotonated COOH moieties.

16. Item 16: The method of items 14 or 15, wherein the deprotonated COOH moieties have an alkali metal cation, preferably $Na^+$, as the counterion.

17. Item 17: The method of any one of items 1 to 16, wherein the repeating unit A and, where applicable, repeating units $A_d$, $A_{dd}$, and, where applicable, repeating units created by the crosslinking are the only repeating units in material A.

18. Item 18: The method of any one of items 1 to 17, wherein step b of heating the material comprises heating the material A at a temperature of above 150°C, for example between 150°C and 300°C, preferably between 150°C and 250°C, more preferably between 180°C and 250°C, even more preferably between 190°C and 250°C.

At temperatures above 180°C, preferably above 190°C, it is presumed that increased decarboxylation occurs in addition to the anhydride formation.

19. Item 19: The method of item 18, wherein step b of heating the material comprises heating the material A at a temperature of between 150°C and 180°C, preferably between 150°C and 170°C.

At temperatures between 150°C and 180°C, preferably between 150°C and 170°C, it is presumed that the decarboxylation reaction is limited.

The heating time can easily be adjusted by the skilled person based on the observed foaming.

20. Item 20: The method of any one of items 13 to 19, wherein step a of providing the material A comprises the following substeps:

a.1 providing a reactive medium comprising a monomer A, and

a.2 obtaining the material A from the reaction medium by a reaction A comprising a polymerization or a copolymerization of the monomer A,

wherein the monomer A has the following structure:

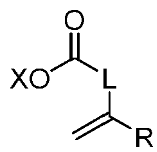

,

Wherein

- L is selected from the list consisting of: a bond, -CH2-, and -CH2-CH2-,
- R is selected from the list consisting of: H, CH3, COOX, CH2-CH3, CH2-COOX, and CH2-CH2-COOX,
- COOX is COOH or a mixture of COOH and a conjugated base thereof,

And wherein the polymerization or the copolymerization of the monomer A results in the formation of a moiety A' having the following structure:

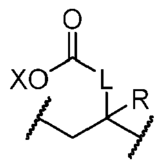

,

wherein moiety A' is comprised in moiety A.

The method of item 20 gives an example of a method of preparation of the material A however other preparation methods may be employed. For example, methods where a material comprising alkyl ester moieties instead of the carboxylic acid moieties of moiety A and where these ester moieties would be subsequently hydrolyzed, or methods where the moiety A is grafted on a previously prepared polymer.

Moiety A may include the product of the reaction of monomer A with itself or with a comonomer or with a cross-linking agent.

In the present disclosure, a distinction is made between monomers and cross-linking agents. Contrary to cross linking agents, monomers do not substantially react to create crosslinks in the structure of the obtained material.

21. Item 21: The method of item 20, wherein R comprises a COOX moiety and wherein, in the monomer A, 60 to 40% of the COOX are COOH.

Adjusting the ionization state of the COOX moieties of the monomer allows to adjust its solubility and reactivity. A partial ionization is favorable when the polymerization is performed in water.

22. Item 22: The method of item 20 or 21, wherein the monomer A is itaconic acid or a mixture of itaconic acid and a

conjugated base thereof.

A conjugated base of itaconic acid may be any form of itaconic acid where 1 or 2 of the carboxylic acid moieties are ionized.

23. Item 23: The method of any one of items 20 to 22, wherein the reaction medium further comprises a monomer B, different from the monomer A, and having the following structure:

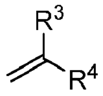

,

Wherein R3 and R4 are independently chosen from H, a C1 to C4 linear alkyl chain, COOX, CH2-COOX, and CH2-CH2-COOX,

Wherein the copolymerization of the monomer A comprises the copolymerization of the monomer A with the monomer B, and wherein said copolymerization results in the formation of a moiety B' obtained from the monomer B, and having the following structure:

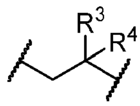

.

The copolymerization of the monomer A with the monomer B is not particularly limited. For example, monomers A and B may copolymerize alternatively, randomly, or in blocks. Moiety B' may or may not be comprised in moiety A.

24. Item 24: The method of item 23, wherein at least one of R3 or R4 is H.

25. Item 25: The method of any one of items 20 to 22, wherein the monomer A is the only monomer in the reaction medium.

When the monomer A is the only monomer in the reaction medium it does not mean that no crosslinking agent may be present in the reaction medium.

26. Item 26: The method of any one of items 20 to 25, wherein the reaction medium further comprises a crosslinking agent A and wherein the reaction A comprises the crosslinking of products obtained by the polymerization or the copolymerization of the monomer A with the crosslinking agent A.

The products obtained by the polymerization or the copolymerization of the monomer A, which are being crosslinked, are not necessarily (co)polymers when the crosslinking reaction happens. Both the crosslinking and the (co)polymerization may take place at the same time. The crosslinking may be a copolymerization reaction or not.

27. Item 27: The method of item 26, wherein the crosslinking agent A comprises at least two moieties C having the following structure:

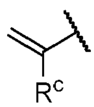

,

Wherein Rc is selected from the list consisting of: H, CH3 and COOH,

Wherein the copolymerization of the monomer A comprises the copolymerization of the monomer A with the crosslinking agent A and wherein said copolymerization results in the formation of moieties C', obtained from moieties C, and having the following structure:

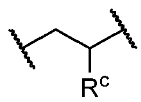

.

28. Item 28: The method of item 27, wherein the crosslinking agent A has a molecular weight of below 500 g/mol, for example below 400 g/mol.

29. Item 29: The method of item 27 or 28, wherein moieties C are comprised in a moiety D having the following

structure:

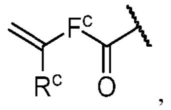

Wherein Fc is -CH2- or a bond.
30. Item 30: The method of item 29, wherein:

Rc is COOH and Fc is -CH2-, or
Rc is H and Fc is a bond.

31. Item 31: The method of item 30, wherein the crosslinking agent A has the following structure comprising two moieties D:

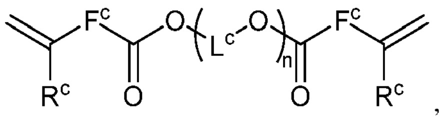

Wherein Lc is selected from the list consisting of: linear alkane-$\alpha,\omega$-diyl radicals in comprising 2 to 8 carbon atoms, and -CH2-CH(CH3)-, with n = 1 when Lc comprises 4 carbon atoms or more and n is 1, 2 or 3 when Lc comprises 3 carbon atoms or less.
32. Item 32: The method of any one of items 26 to 31, wherein the crosslinking agent A is the only crosslinking agent in the reaction medium.
33. Item 33: The method of any one of items 26 to 32, wherein the molar ratio of the amount of all the crosslinking agents in the reaction medium to the amount of all the monomers in the reaction medium is below 15%, preferably below 10%, more preferably below 7%.
34. Item 34: The method of any one of items 26 to 32, wherein the mass percentage of all the crosslinking agents in the reaction medium relative to the total mass of the reactive medium is below 7%, preferably below 5%, more preferably below 3%.
35. Item 35: The method of any one of items 26 to 32, wherein the molar ratio of the amount of all the crosslinking agents in the reaction medium to the amount of all the monomers in the reaction medium is above 7%, preferably between 7 % and 15%, more preferably between 7% and 12%.
36. Item 36: The method of any one of items 26 to 32, wherein the mass percentage of all the crosslinking agents in the reaction medium relative to the total mass of the reactive medium is above 3%, preferably between 3% and 7%, more preferably between 3 and 5%.

It has been observed that the volume expansion factor and the porosity of the obtained foam depends on the extent of crosslinking in material A. Thus, higher amounts of crosslinking agents in the reaction medium lead to lower porosities and expansion factors and lower amounts of crosslinking agents in the reaction medium lead to higher porosities and expansion factors.

37. Item 37: The method of any one of items 20 to 36, wherein the polymerization or the copolymerization of the monomer A is a radical polymerization or copolymerization.
38. Item 38: The method of item 37, wherein the reaction medium further comprises a radical initiator A to initiate the polymerization or the copolymerization of the monomer A.
39. Item 39: The method of item 38, wherein the radical initiator A is a peroxide initiator, such as a persulfate, or an azo initiator, such as azobisisobutyronitrile.

As defined herein a peroxide is a molecule that comprises the moiety -O-O-, for example persulfates or tert-butyl peroxides are peroxide initiators that may be used in the present method.

40. Item 40: The method of item 39, wherein the radical initiator A is a peroxydisulfate.
41. Item 41: The method of item 40, wherein the radical initiator A is potassium peroxydisulfate.
42. Item 42: The method of any one of items 38 to 41, wherein the radical initiator A is the only radical initiator in the reaction medium.

43. Item 43: The method of any one of items 38 to 42, wherein the amount of all the radical initiators in the reaction medium is of 0.1% mol/mol to 3% mol/mol, relative to the amount of all the monomers and, where applicable, the amount of all the cross-linking agents in the reaction medium.
44. Item 44: The method of item, wherein the radical initiator A is a peroxide initiator, preferably a persulfate, more preferably a peroxydisulfate, and wherein the reaction medium further comprises tetramethylethylenediamine (TEMED).

It has been observed that the use of the combination of a persulfate and TEMED to initiate the polymerization allowed for an efficient polymerization, in particular in the case where the monomer is itaconic acid or a conjugated base thereof, where the polymerization is very difficult otherwise.

45. Item 45: The method of item 44, wherein the amount of TEMED in the reaction medium is of 0.9 to 1.5 times the amount of peroxide initiator in the reaction medium.
46. Item 46: The method of any one of items 20 to 45, wherein the reaction medium further comprises water as a solvent.
47. Item 47: The method of item 46, wherein water is the only solvent in the reaction medium.
48. Item 48: A polymeric foam obtainable by the method of any one of items 1 to 47.

## Examples

The synthesis of poly(itaconic acid) (PIA) hydrogels (corresponding to material A) was carried out by free radical polymerization in water at room temperature. The redox pair potassium persulfate (KPS) / tetramethylethylenediamine (TEMED) was used as an initiator and diethylene glycol diacrylate (DEGDA) as the crosslinking agent. Samples with different ratio of itaconic acid (IA) and DEGDA were prepared based on the following procedure.
In a 50 ml two-neck round-bottom flask equipped with an inlet for passing nitrogen gas, a solution of IA in MilliQ water is added. 1 eq. of sodium hydroxide was added gradually to the solution at 0°C. The pH was monitored in the range from 3.8 to 5.5, corresponding to the monoanion species of itaconic acid. After the complete dissolution of itaconic acid in water, the cross-linking agent DEGDA was introduced followed by the addition of KPS. The solution was degassed by nitrogen bubbling for 30 min. After a rapid addition of TEMED by a syringe, the solution is promptly transferred into plastic syringes (diameter of 5 mm) that have been pre-purged with nitrogen gas. The polymerization reaction was allowed to proceed for six days. After completion of the reaction, the gels were cut with a blade and then immersed in a large excess of Milli-Q water to rinse them after which the hydrogels were dried at 60°C for 48h.
A series of hydrogels was prepared by varying the molar ratio of DEGDA / IA (0, 2, 4 ,6, 8 and 10 mol%). The amounts used are specified in table 1 and some ratios are calculated in table 2.

Table 1.

| Sample | IA (g) | Water (g) | NaOH (g) | DEGDA (g) | KPS (g) | TEMED (g) |
|---|---|---|---|---|---|---|
| S0 | 5 | 12.5 | 1.5 | 0 | 0.1 | 0.045 |
| S2 | 5 | 12.5 | 1.5 | 0.16 | 0.1 | 0.045 |
| S4 | 5 | 12.5 | 1.5 | 0.33 | 0.1 | 0.045 |
| S6 | 5 | 12.5 | 1.5 | 0.49 | 0.1 | 0.045 |
| S8 | 5 | 12.5 | 1.5 | 0.66 | 0.1 | 0.045 |
| S10 | 5 | 12.5 | 1.5 | 0.82 | 0.1 | 0.045 |

Table 2.

| Sample | $n_{DEGDA} / n_{IA} \times 100$ | $m_{DEGDA} / m_{tot} \times 100$ | $n_{KPS} / n_{IA} \times 100$ | $n_{TEMED} / n_{KPS}$ |
|---|---|---|---|---|
| S0 | 0 | 0 | 0.96 | 1.0 |
| S2 | 2 | 0.85 | 0.96 | 1.0 |
| S4 | 4 | 1.69 | 0.96 | 1.0 |
| S6 | 6 | 2.51 | 0.96 | 1.0 |
| S8 | 8 | 3.33 | 0.96 | 1.0 |

(continued)

| Sample | $n_{DEGDA} / n_{IA} \times 100$ | $m_{DEGDA} / m_{tot} \times 100$ | $n_{KPS} / n_{IA} \times 100$ | $n_{TEMED} / n_{KPS}$ |
|---|---|---|---|---|
| S10 | 10 | 4.12 | 0.96 | 1.0 |

The foaming of hydrogel samples was initiated by subjecting them to thermolysis under high temperature conditions using different methods.

In the first method, the dried hydrogel samples were placed in an oven set at an initial temperature of 20°C. The oven temperature was then increased at a rate of 20°C/min until reaching the temperature of 350°C.

Visual observation as well as IR spectroscopy were conducted periodically to monitor the foaming process. It was observed that foaming happened once a temperature of 150°C was reached. On the IR spectra (performed on a Bruker Tensor 27 spectrophotometer using solid samples, the spectral resolution is set at 4 cm-1 over the range of 4000 to 650 $cm^{-1}$ with 64 scans per spectrum; see Fig. 2), from 120 to 160°C, peaks at 1845 and 1770 $cm^{-1}$ and in the range of 1050 to 865 $cm^{-1}$ appeared, indicating the formation of anhydrides. As the temperature increases, the characteristic peaks of the anhydride decrease. Additionally, there is a gradual shift of the carbonyl peak towards higher wavenumbers (from 1700 to 1730 $cm^{-1}$). This could be explained by decarboxylation reactions leading to the formation of ketone functions. Foam morphology was characterized using scanning electron microscopy (SEM) and revealed a structure with closed regular cells with a mean diameter around 10 $\mu$m.

In the second method, the dried hydrogel samples were placed in a thermobalance system equipped with a halogen lamp for heating (HE73 Halogen Desiccator supplied by Mettler-Toledo SAS). The hydrogels were subjected to foaming at a constant temperature of 200°C. The specimens were positioned on the sample holder, and heating was initiated using the halogen lamp. The foaming process continued until it reached a stable state where the variation of mass is less than 8 mg/min (which took around 1 or 2 minutes). The initially transparent samples become opaque upon foaming with a clear color, while the shape of the sample is retained (see Fig. 1). The foam porosity and volume expansion factor ($\alpha$) of the obtained samples were measured

The volume expansion factor ($\alpha$) is related to the expansion or increase in volume of a foam material. It can be defined as the ratio of the volume of the foam after expansion (Vf) to its original volume before expansion (Vd):

$$\alpha = Vf/Vd$$

The porosity of foam refers to the fraction of voids within the foam structure relative to the total volume of the foam. It was calculated using the following formula:

$$Porosity(\%) = (Vf\text{-}Vd)/Vf \times 100$$

Vf and Vd were calculated from the mass of the samples and their density, which was measured as follows: The density of the samples was determined by pycnometry using decane as a solvent at 25°C. The measurement process comprises providing a pycnometer of known volume Vp, weighing the empty pycnometer, filling it with decane and measuring measure the mass again to deduce the mass m1 of a volume Vp of decane. Starting again from the empty pycnometer, introducing a sample of mass m0, topping it off with decane to fill the pycnometer, and then measuring the total mass again (m2).

Measurements are summarized in table 3

Table 3.

| Sample | $\alpha$ | Porosity(%) |
|---|---|---|
| S2 | 4.4 | 77 |
| S4 | 4.0 | 75 |
| S6 | 3.9 | 74 |
| S8 | 2.5 | 60 |
| S10 | 1.9 | 48 |

Foaming was also observed during the study of sample S0 by DSC (using a DSC25 system supplied by TA instruments). 10 mg of a powder of S0 were introduced in a standard aluminum DSC capsule (flat disc having a diameter of

5.3 mm and a height of 2.56 mm), which was then sealed. The sample was subjected to a controlled heating ramp from 20°C to 350°C at a rate of 10°C/min. Post-heating inspection of the capsule revealed that the polymer expanded and occupied the available volume maintaining the cylindrical shape of the DSC capsule.

Furthermore, thermogravimetric analysis (TGA) was performed using a STD650 thermobalance supplied by TA Instruments respectively (samples of about 10 mg and heating rate of 10°C). The instrument used also allowed the measurement of heat flow in and out of the sample.

The heat flow curve (see Fig. 3) shows two endothermic peaks at 170°C and 210°C (attributed to the formation of the anhydride and to its subsequent decarboxylation), and at a temperature above 300°C, the degradation process becomes exothermic, indicating a rupture of the polymer chains due to the elevated temperature.

The thermogravimetric analysis curve (see Fig. 3) shows a degradation process between 150°C and approximately 250°C. By examining the heat flow curve, the mass loss is attributed to the loss of water molecules forming the anhydride around 160°C, followed by the degradation of the anhydride around 200°C as has been demonstrated by FTIR analysis.

The synthesis of an itaconic acid-based cross-linker was conducted as follows:

Initially, itaconic anhydride (AnhI) was dissolved in acetonitrile. Once the anhydride had completely dissolved, the solution was cooled to below 5°C using an ice bath. At this point, the diol and the catalyst trimethylsilyl trifluoromethanesulfonate (TMSOTf) were added to the mixture. The reaction was stirred at 5°C for 5-10 minutes. Subsequently, the ice bath was removed, and the reaction mixture was maintained under agitation at 25°C for the desired reaction time. The conversion of the starting diol was monitored using $^1H$ NMR spectroscopy. The solvent was then removed under vacuum, and the resulting product was washed three times with dichloromethane to remove any remaining itaconic acid or anhydride. The final product was characterized by NMR and Mass Spectrometry (the molar masses measured were the expected molar masses).

Note that depending on the attack of the diol on the carbonyl of the anhydride, different types of products can be obtained. In the following, I (Internal) refers to the product where the diol attacks the C=C-CO carbonyl, while E (External) refers to the product where the diol attacks the C=C-CH2-CO carbonyl (Scheme 2). The difference between the two structures is identified using the 2D NMR HMBC (Heteronuclear Multiple Bond Correlation) technique.

The diols used were: ethylene glycol (EG), propanediol, and diethylene glycol (DEG). Table 4 below summarizes the experimental conditions and the results obtained.

Table 4

| Entry | alcohol | AnhI/alcohol/TMSOTf | Temperature (°C) | Time (h) | Conversion (%) | Selectivity E/I | M (g/mol) |
|---|---|---|---|---|---|---|---|
| 1 | DEG | 2.2:1:0.025 | 60 | 5h | >99 | 83/17 | 348 |
| 2 | EG | 2.2:1:0.025 | 25 | 5h | >99 | 70/30 | 304 |
| 3 | propanediol | 2.5:1:0.025 | 25 | 5h | >99 | 84/16 | 318 |

## Claims

1. Method of preparation of a polymeric foam comprising the following steps:

   a. Providing a material A,
   b. Heating the material A to obtain the polymeric foam,

   Wherein the material A is a polymeric material comprising a repeating unit A, said repeating unit A comprising a moiety A having the following structure:

   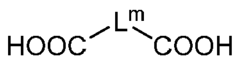 ,

   wherein $L^m$ is a substituted alkane-α,ω-diyl radical wherein said alkane is a C2 to C7 alkane or $L^m$ is a substituted alkene-α,ω-diyl radical wherein said alkene is a C2 to C7 alkene.

2. The method of claim 1, wherein the material A is a covalently crosslinked polymeric material.

3. The method of claim 1 or 2, wherein the material A has a predetermined shape and wherein the polymeric foam

obtained has the same shape.

**4.** The method of claim 1 or 2, wherein the material A is provided in the form of a powder in step a. and wherein the material A is introduced into a mold before step b.

**5.** The method of any one of claims 1 to 4, wherein $L^m$ is a substituted alkane-$\alpha,\omega$-diyl radical wherein said alkane is a C3 to C7 alkane.

**6.** The method of claim 5, wherein $L^m$ is a substituted butan-1,4-diyl radical or a substituted pentan-1,5-diyl radical.

**7.** The method of claim 6, wherein the moiety A has the following structure:

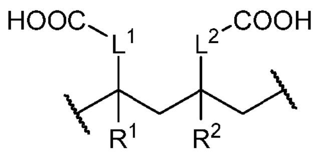
,

wherein

L1, and L2 are independently selected from the list consisting of: a bond, -CH2-, and -CH2-CH2-, and
R1 and R2 are independently selected from the list consisting of: H, CH3, COOH, CH2-CH3, CH2-COOH, and CH2-CH2-COOH.

**8.** The method of claim 7, wherein L1 and L2 are each -CH2- and wherein R1 and R2 are each COOH.

**9.** The method of any one of claims 1 to 8, wherein step b of heating the material comprises heating the material A at a temperature of above 150°C, for example between 150°C and 300°C, preferably between 150°C and 250°C, more preferably between 180°C and 250°C, even more preferably between 190°C and 250°C.

**10.** The method of any one of claims 7 to 9, wherein step a of providing the material A comprises the following substeps:

a.1 providing a reactive medium comprising a monomer A, and
a.2 obtaining the material A from the reaction medium by a reaction A comprising a polymerization or a copolymerization of the monomer A,
wherein the monomer A has the following structure:

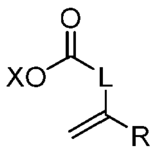
,

Wherein

- L is selected from the list consisting of: a bond, -CH2-, and -CH2-CH2-,
- R is selected from the list consisting of: H, CH3, COOX, CH2-CH3, CH2-COOX, and CH2-CH2-COOX,
- COOX is COOH or a mixture of COOH and a conjugated base thereof,

And wherein the polymerization or the copolymerization of the monomer A results in the formation of a moiety A' having the following structure:

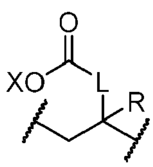
,

wherein moiety A' is comprised in moiety A.

**11.** The method of claim 10, wherein the reaction medium further comprises a crosslinking agent A, wherein the reaction A comprises the crosslinking of products obtained by the polymerization or the copolymerization of the monomer A with the crosslinking agent A, and wherein the crosslinking agent A comprises at least two moieties C having the following structure:

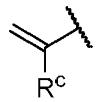

,

Wherein Rc is selected from the list consisting of: H, CH3 and COOH,
Wherein the copolymerization of the monomer A comprises the copolymerization of the monomer A with the crosslinking agent A and wherein said copolymerization results in the formation of moieties C', obtained from moieties C, and having the following structure:

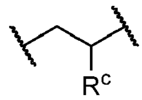

.

**12.** The method of claim 11, wherein the molar ratio of the amount of all the crosslinking agents in the reaction medium to the amount of all the monomers in the reaction medium is below 15%, preferably below 10%, more preferably below 7%.

**13.** The method of claim 11, wherein the mass percentage of all the crosslinking agents in the reaction medium relative to the total mass of the reactive medium is below 7%, preferably below 5%, more preferably below 3%.

**14.** The method of any one of claims 10 to 13, wherein the polymerization or the copolymerization of the monomer A is a radical polymerization or copolymerization, wherein the reaction medium further comprises a radical initiator A to initiate the polymerization or the copolymerization of the monomer A, wherein the radical initiator A is a peroxide initiator, preferably a persulfate, more preferably a peroxydisulfate, and wherein the reaction medium further comprises tetramethylethylenediamine (TEMED).

**15.** A polymeric foam obtainable by the method of any one of items 1 to 14.

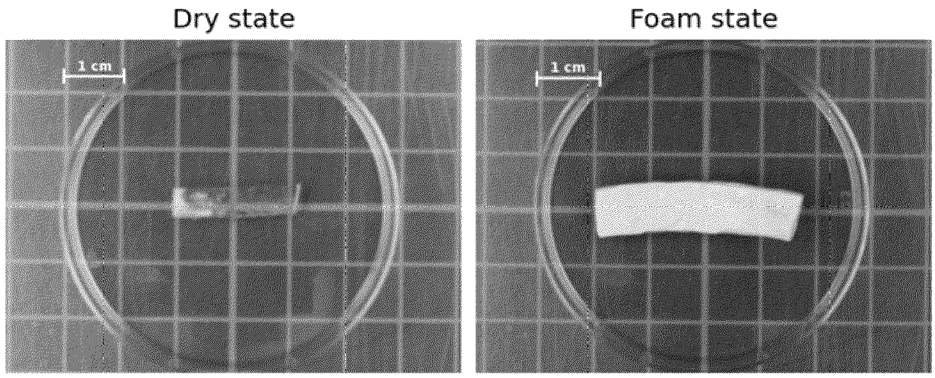
Dry state
Foam state
1 cm
1 cm

Fig. 1

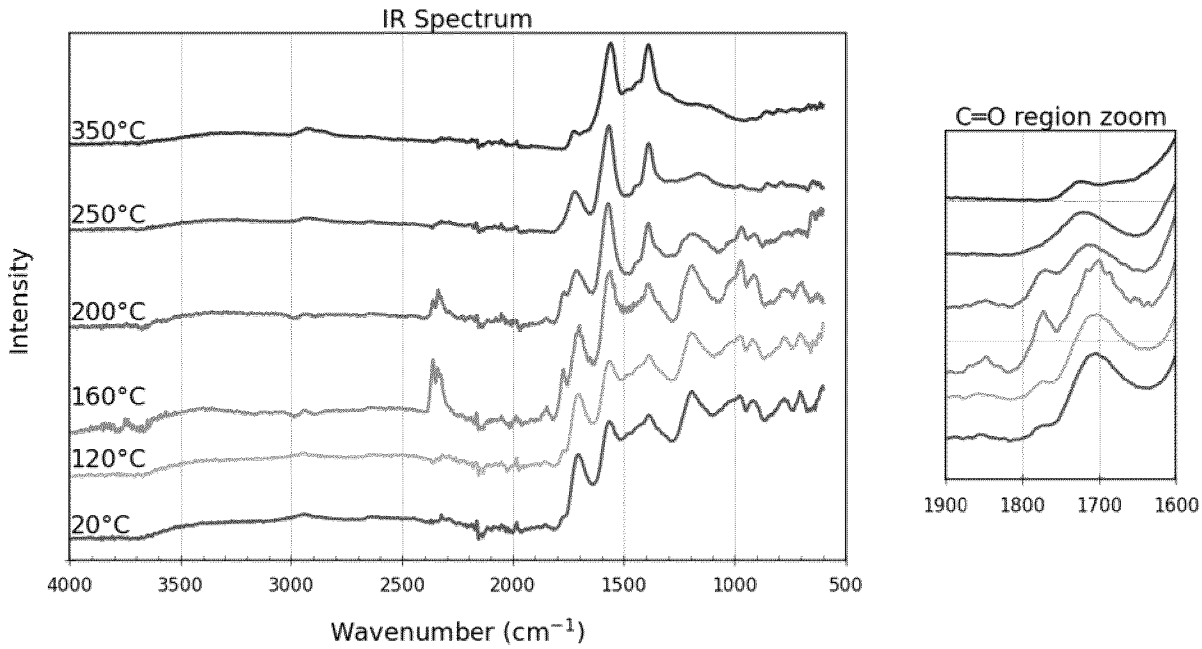
IR Spectrum
350°C
250°C
200°C
160°C
120°C
20°C
Intensity
Wavenumber (cm⁻¹)
4000
3500
3000
2500
2000
1500
1000
500
C=O region zoom
1900
1800
1700
1600

Fig. 2

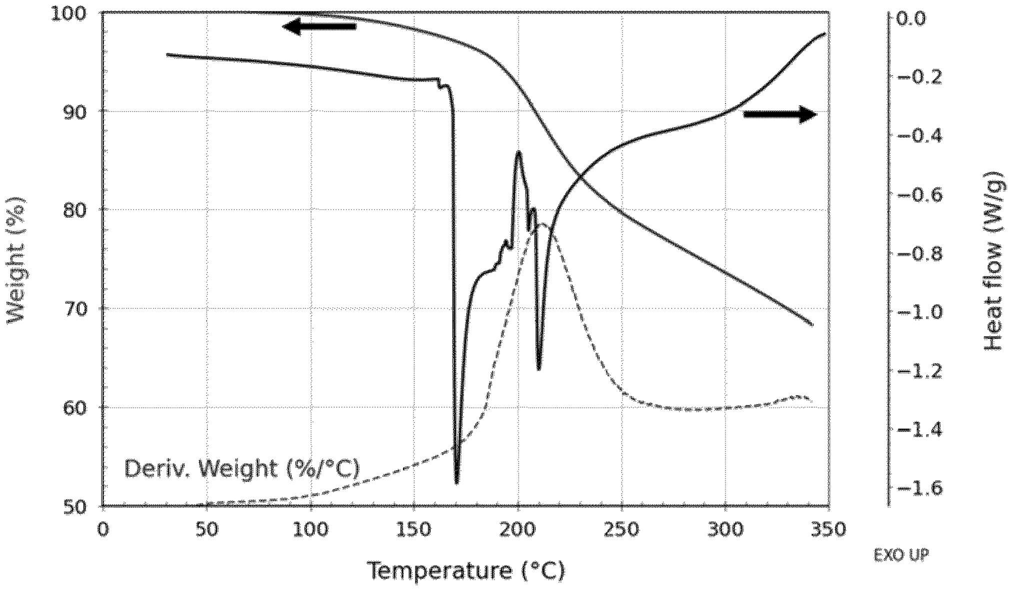

100
90
80
70
60
50
Weight (%)
0.0
−0.2
−0.4
−0.6
−0.8
−1.0
−1.2
−1.4
−1.6
Heat flow (W/g)
Deriv. Weight (%/°C)
0
50
100
150
200
250
300
350
Temperature (°C)
EXO UP


Fig. 3

Europäisches Patentamt
European Patent Office
Office européen des brevets

# EUROPEAN SEARCH REPORT

Application Number
EP 24 30 7080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/092714 A2 (BASF SE [DE]; AULENTA FRANCESSA [DE] ET AL.) 30 July 2009 (2009-07-30) | 1-10,14, 15 | INV. C08J9/28 C08F222/02 |
| Y | * examples * * claims * ----- | 11-13 | |
| X | DE 199 09 214 A1 (BASF AG [DE]) 7 September 2000 (2000-09-07) | 15 | |
| Y | * example 1 * ----- | 11-13 | |

TECHNICAL FIELDS SEARCHED (IPC)

C08J
C08F
C08L

The present search report has been drawn up for all claims

1

| Place of search | Date of completion of the search | Examiner |
|---|---|---|
| The Hague | 26 May 2025 | Schlicke, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 30 7080

This annex lists the patent family members relating to the patent documents cited in the above-mentioned European search report. The members are as contained in the European Patent Office EDP file on The European Patent Office is in no way liable for these particulars which are merely given for the purpose of information.

26-05-2025

| Patent document cited in search report | Publication date | Patent family member(s) | Publication date |
|---|---|---|---|
| WO 2009092714 A2 | 30-07-2009 | AT E552282 T1 | 15-04-2012 |
| | | EP 2238180 A2 | 13-10-2010 |
| | | JP 2011510146 A | 31-03-2011 |
| | | US 2011015285 A1 | 20-01-2011 |
| | | WO 2009092714 A2 | 30-07-2009 |
| DE 19909214 A1 | 07-09-2000 | DE 19909214 A1 | 07-09-2000 |
| | | EP 1165673 A1 | 02-01-2002 |
| | | ES 2190948 T3 | 01-09-2003 |
| | | JP 4669127 B2 | 13-04-2011 |
| | | JP 2002538254 A | 12-11-2002 |
| | | US 6750262 B1 | 15-06-2004 |
| | | WO 0052087 A1 | 08-09-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **FLORENT MONIE et al.** Self-foaming polymers: Opportunities for the next generation of personal protective equipment. *Materials Science and Engineering: R: Reports*, 2021, vol. 145, 100628